# EUROPÄISCHE PATENTSCHRIFT

(11) **EP 3 887 129 B1**
(45) Veröffentlichungstag und Bekanntmachung des Hinweises auf die Patenterteilung: **22.02.2023**
(21) Anmeldenummer: 19816574.8
(22) Anmeldetag: 29.11.2019
(51) Int. Cl.: B29C 65/02, B29C 65/56, B29C 65/72, B29C 65/00, B29C 65/06, B29L 31/30, B29C 65/10, B29C 65/14, B29C 65/16, B29C 65/48

(54) **VERFAHREN ZUM VERBINDEN VON THERMOPLASTISCHEN VERBUNDWERKSTOFFTEILEN 2**
METHOD FOR CONNECTING THERMOPLASTIC COMPOSITE MATERIAL PARTS
PROCÉDÉ PERMETTANT D'ASSEMBLER DES PIÈCES EN MATÉRIAUX COMPOSITES THERMOPLASTIQUES

(30) Priorität: 30.11.2018 DE 102018009378; 10.01.2019 DE 102019100451
(43) Veröffentlichungstag der Anmeldung: 06.10.2021
(73) Patentinhaber: Airbus Operations GmbH, 21129 Hamburg (DE)
(72) Erfinder: VICHNIAKOV, Alexei, 21129 Hamburg (DE); WITTE, Tassilo, 21129 Hamburg (DE)
(86) Internationale Anmeldenummer: PCT/EP2019/083190
(87) Internationale Veröffentlichungsnummer: WO 2020/109610

(56) Entgegenhaltungen:
- DE-A1-102009 056 580
- DE-A1-102014 218 193
- DE-A1-102015 210 965
- DE-A1-102016 114 988

## Beschreibung

### Gebiet der Erfindung

Die Erfindung betrifft ein Verfahren zum Verbinden von thermoplastischen Verbundwerkstoffteilen.

### Hintergrund der Erfindung

Thermoplastische Verbundwerkstoffe können als Alternative zu Verbundwerkstoffen auf der Basis von duromeren Harzen verwendet werden. Ihrer Matrix besteht im Gegensatz zu üblichen Verbundwerkstoffen nicht aus Polyester- oder Epoxydharz, sondern aus einem Thermoplastischen Kunststoff. Als solche Matrix bildenden thermoplastischen Kunststoffe können PEEK, PEKK, PAEK, PEAK, PPS, PEI, PA, PES verwendet werden. In den thermoplastischen Kunststoff sind Verstärkungsfasern eingebettet. Als Verstärkungsfasern können Kohlenstofffasern, Kevlar- oder Glasfasern eingesetzt werden. Die Verstärkungsfasern sind dabei wie in herkömmlichen Faserverbundwerkstoffen in die Matrix eingebettet.

Aus Verbundwerkstoffen hergestellte Werkstücke können auf verschiedene Weise miteinander verbunden werden. Ein solches Verbinden kann durch Kleben erfolgen. Nicht in allen Anwendungsgebieten sind Klebeverbindungen üblich und verbreitet, beispielsweise in lasttragenden Bereichen von Fahrzeugen Strukturen. Ein Grund dafür ist die mangelhafte Prüfbarkeit der Verbindung: Eine Klebeverbindung, die zwischen zwei flächig verklebten teilen angeordnet ist, bleibt dem Auge des prüfenden Betrachters verborgen. Eine andere Verbindungstechnik ist das Verwenden von Befestigungselementen wie Nieten, Schrauben und/oder Bolzen. Um solche Befestigungselemente einzusetzen, müssten die zu verbindenden Werkstücke an den Verbindungsstellen gebohrt werden. Im Fall von Bauteilen aus thermoplastischen Verbundwerkstoffen stellt das Bohren des Werkstücks keine triviale Bearbeitung dar, weil das Matrixmaterial des thermoplastischen Verbundwerkstücks durch die Reibungswärme des Bohr Vorganges erwärmt wird. Außerdem werden durch das Bohren die lasttragenden Verstärkungsfasern durchtrennt.

Weiterhin sind selbstschneidende Schrauben als Verbindungsmittel bekannt, die mit einem durch die Reibungswärme des Einschraubens erweichbaren Dichtmaterials ausgestattet sind. Auch dieses Verbindungsmittel setzt ein vorheriges Bohren mit der damit einhergehenden Schwächung des Fasermaterials voraus.

DE 102016114988 A1 offenbart ein Befestigungselement zur reibungsbasierten Befestigung in einem Bauteil, das vorzugsweise faserverstärkten Kunststoff umfasst, umfassend einen Kopf, einen Schaft und eine Spitze, wobei das Befestigungselement einen thermoplastischen Kunststoff, der sich bei einem Einbringen des Befestigungselements in das Bauteil teilweise reibungsbedingt erwärmt und erweicht und sich zur Ausbildung der Befestigung teilweise verformt, umfasst, wobei an der Spitze eine schneidenartige Eindringeinrichtung angeordnet ist.

DE 102015210965 A1 offenbart ein Verfahren zur Herstellung eines Bauteilverbundes umfassend eine Befestigungsstruktur, umfassend wenigstens eine Bauteillage und ein thermoplastisches Verbindungselement, aufweisend einen Kopf und einen Schaft, wobei das Verbindungselement unter Rotation und Druck in die Befestigungsstruktur eingetrieben wird, so dass der Schaft die Befestigungsstruktur durchdringt, wobei das Verbindungselement nach Durchdringen der Befestigungsstruktur an einer Matrize unter Reibung erweicht und umgeformt wird, die entgegen der Eintreibrichtung an der Befestigungsstruktur angelegt wird, so dass sich eine über die radiale Ausdehnung des Schaftes hinaus erstreckende Verdickung ergibt, wobei die Befestigungsstruktur zwischen Kopf und Verdickung formschlüssig gehalten wird.

DE102014218193 A1 offenbart ein Verbindungselement zum Fügen von mindestens zwei Fügeteilen mittels eines mechanischen Fügeprozesses, bei welchem Wärme durch Reibung entsteht, wobei zumindest ein Fügeteil einen faserverstärkten Kunststoff aufweist, wobei das Verbindungselement als Reibnagel oder Stanzniet oder Halbhohlstanzniet oder Setzbolzen ausgebildet ist, wobei das Verbindungselement an einem ersten stirnseitigen Ende ein Kopfteil aufweist, wobei von dem Kopfteil ein stiftförmiger Abschnitt des Verbindungselements absteht, dadurch gekennzeichnet, dass am oder im stiftförmigen Abschnitt des Verbindungselements mindestens eine Kavität angeordnet ist, wobei in zumindest einer Kavität ein bei Wärmeeinwirkung expandierbares Material angeordnet ist.

Dem Stand der Technik fehlte es also an einer Verbindungstechnik, die es erlaubt Werkstücke aus thermoplastischen Verbundwerkstoffen ohne Schwächung der Verstärkungsfasern dauerhaft miteinander zu verbinden.

### Beschreibung der Erfindung

Es hat sich nun für den Fachmann völlig überraschend herausgestellt, dass verbundene Bauteile aus thermoplastischen Faserverbundwerkstoffen , wobei die Verbindung der Bauteile durch Nadeln erfolgt, die unter Druck und Rotation in das dadurch erweichten Matrixmaterial der Bauteile eingeführt werden, den Nachteilen des Standes der Technik abhelfen. Die Erfindung umfasst auch ein Verfahren zum Verbinden von Bauteilen aus thermoplastischen Faserverbundwerkstoffen umfassend das Positionieren der Bauteile zueinander, das Aufsetzen einer Nadel unter Druck, Versetzen der Nadel in eine Rotationsbewegung, so dass das thermoplastische Matrixmaterial erweicht und die Nadel durch das erweichte Matrixmaterial der Bauteile geschoben wird, Erstarren des thermoplastischen Matrixmaterials. Nadeln im Sinne der Erfindung können auch Stifte oder andere Verbindungselemente sein.

Erfindungsgemäß ist es erforderlich, dass die Nadeln nicht senkrecht zur Bauteiloberfläche an der Ein- oder Austrittstelle angeordnet sind. Weiterhin ist bevorzugt, wenn der Winkel der die Bauteile miteinander verbindenden Nadel zur Oberfläche der verbundenen Bauteile weniger als 80°, bevorzugt weniger als 70°, besonders bevorzugt weniger als 60°, und ganz besonders bevorzugt weniger als 50° beträgt. Weiterhin ist bevorzugt, wenn die Nadel zylinderförmig ist. Weiterhin ist bevorzugt, wenn die Oberfläche der Nadel geriffelt ist. Weiterhin ist bevorzugt, wenn eine Mehrzahl von Nadeln paarweise über Kreuz zueinander angeordnet sind und dabei der Winkel benachbarter Nadeln zueinander im Wesentlichen 90° beträgt. Weiterhin ist bevorzugt, wenn der überstehende Teil der Nadeln so behandelt wird, dass eine ebene Bauteilfläche resultiert. Dies kann geschehen, indem der überstehende Teil der Nadeln umgebogen wird und/oder indem der überstehende Teil der Nadeln abgeschnitten wird. Weiterhin ist bevorzugt, wenn der überstehende Teil der Nadeln mit einem zusätzlichen Befestigungsmittel auf der Oberfläche der Bauteile fixiert wird. Weiterhin ist bevorzugt, wenn die Bauteile zusätzlich durch ein thermoplastisches Schweißverfahren miteinander verbunden werden. Ein solches thermoplastisches Schweißverfahren kann Laser-Schweißen, UltraschallSchweißen, Induktionsschweißen, Widerstandsschweißen oder Wärmeleitungsschweißen sein, entweder ein einzelnes dieser Verfahren oder eine Kombination mehrerer dieser Verfahren. Weiterhin ist bevorzugt, wenn eine Bauteiloberfläche ein Blitzschutzmaterial aufweist. Weiterhin ist bevorzugt, wenn das Blitzschutzmaterial aus metallischem Streckgitter besteht. Weiterhin ist bevorzugt, wenn eine Bauteiloberfläche ein Blitzschutzmaterial aus einer metallischen Lochfolie aufweist. Weiterhin ist bevorzugt, wenn die Kraft, mit der die Nadeln auf die Bauteil Oberfläche gedrückt werden, zwischen 50 und 1000 N, bevorzugt zwischen100 und 500 N liegt. Weiterhin ist bevorzugt, wenn die Rotationsfrequenz der rotierenden Nadel 5.000-2000 Umdrehungen pro Minute beträgt. Weiterhin ist bevorzugt, wenn die überstehenden Teile der Nadeln anschließend umgebogen werden, so dass die aus dem Bauteil herausragenden Teile der Nadeln flach auf der oder den Bauteiloberfläche(n) zu liegen kommt oder kommen. Weiterhin ist bevorzugt, wenn die überstehenden Teile der Nadeln anschließend so umgebogen werden, so dass die aus dem Bauteil herausragenden Teile der Nadeln mit einem ersten Teil flach auf der oder den Bauteiloberfläche(n) zu liegen kommt oder kommen und mit einem zweiten zum Teil im Wesentlichen senkrecht in die Bauteiloberfläche eindringen. Weiterhin ist bevorzugt, wenn die Nadeln eines der zu verbindenden Bauteile nur zum Teil durchdringen, bevorzugt zu höchstens 2/3 bezogen auf die jeweilige Bauteildicke. Weiterhin ist bevorzugt, wenn die Nadeln so ausgeführt sind, dass sie wenigstens eine vordefinierte Bruchstelle aufweisen, die im Wesentlichen bündig zur Bauteiloberfläche positioniert wird. solche Sollbruchstellen können auf beiden aus den Bauteilen herausragenden Abschnitten der Nadeln positioniert sein, im Wesentlichen bündig zur Bauteiloberfläche. Weiterhin ist bevorzugt, wenn die Nadeln einen Kopf aufweisen, der bündig zur Bauteiloberfläche positioniert wird. Dieser Kopf kann ein Flachkopf, ein Halbrundkopf oder ein Senkkopf sein. Weiterhin ist bevorzugt, wenn ein solcher Kopf bündig zur Bauteiloberfläche positioniert wird. Weiterhin ist bevorzugt, wenn die Verbindungsstelle vor und oder während des Einführens der Nadeln zusätzlich (Heißluft, Induktion, Laserlicht, Infrarot, usw.) aufgewärmt wird. Weiterhin ist bevorzugt, wenn aus Bauteiloberflächen herausragende Teile der Nadeln jeweils in einem separaten Schritt entfernt werden, bevorzugt unter Verwendung von vordefinierten Bruchstellen (Sollbruchstellen). Die Erfindung umfasst auch ein Fahrzeug, insbesondere ein Flugzeug mit erfindungsgemäßen Bauteilen.

Die oben beschriebenen Aspekte und weitere Aspekte, Merkmale und Vorteile der Erfindung können ebenfalls aus den Beispielen der Ausführungsformen entnommen werden, welche im Folgenden unter Bezugnahme auf die anhängenden Zeichnungen beschrieben werden.

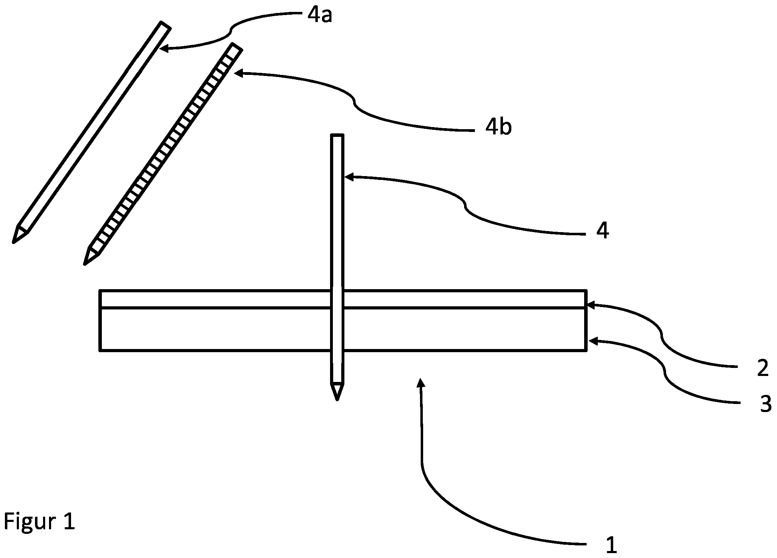

Figur 1 zeigt zwei verbundene Bauteile (1) aus thermoplastischen Faserverbundwerkstoffen. Dabei wird das verbundene Bauteil (1) aus einem ersten Bauteil (2) mit einem zweiten Bauteil (3) unter Verwendung von Nadeln (4) zusammengefügt. Die Nadeln (4) sind zylindrisch geformt und können eine glatte Oberfläche (4a) oder eine geriffelte Oberfläche (4b) aufweisen. Nadeln mit glatter Oberfläche (4a) weisen Vorteile bei ihrer Fertigung auf. Sie lassen sich besonders einfach herstellen. Nadeln mit geriffelter Oberfläche (4b) weisen Vorteile bei ihrer Verarbeitung sowie hinsichtlich der Haltbarkeit des zusammengesetzten Bauteils (1) auf. Durch die geriffelte Oberfläche kann durch eine dünnere Nadel Reibungswärme mit einer höheren Leistungsdichte erzeugt werden, was eine schnellere Verarbeitung der Nadel ermöglicht. Darüber hinaus halten die geriffelte Nadeln nachdem Erstarren des thermoplastischen Matrixmaterials die Bauteile (2) und (3) besser zusammen. Zusätzlich kommt es bei Verwendung geriffelter und dünnerer Nadeln zu weniger Verformungen und zu weniger Schäden der lasttragenden Fasern in den Bauteilen (2) und (3), so dass das verbundene Bauteil verbesserte mechanische Eigenschaften aufweist.

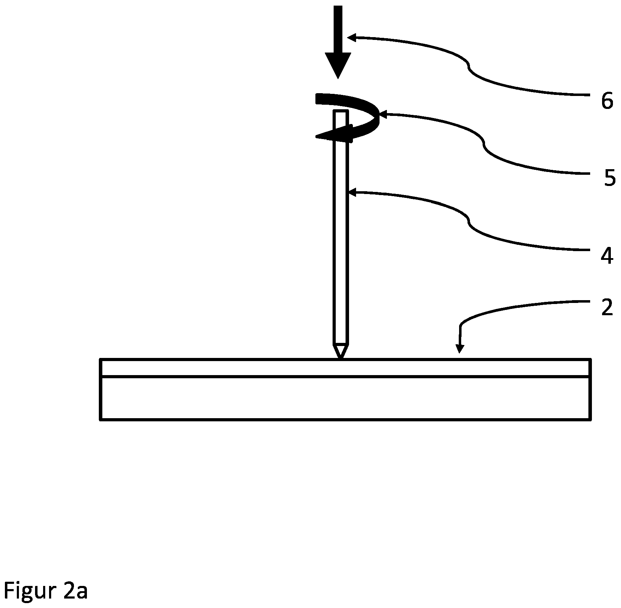

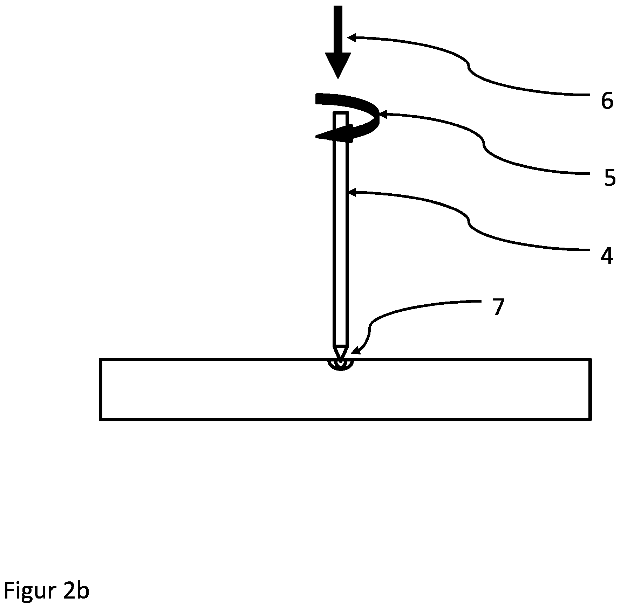

Figuren 2a und 2 b zeigen die Verarbeitung erfindungsgemäßer Nadeln (4) zu erfindungsgemäßen Bauteilen (1). Die Nadel (4) wird in Rotation (5) versetzt und mit Druck (6) auf die Oberfläche des Bauteils (2) gedrückt. Dabei bildet sich durch die entstehende Reibungswärme an der Spitze der Nadel (4) eine Zone mit geschmolzenen Matrixmaterial (7), in die die Nadel (4) vorgeschoben werden kann. Dabei werden die lasttragenden Fasern des Bauteils (2) im Wesentlichen nicht beschädigt, sondern so deformiert, dass die Nadel (4) durch die Faserlagen des Bauteils (2) hindurch dringen kann.

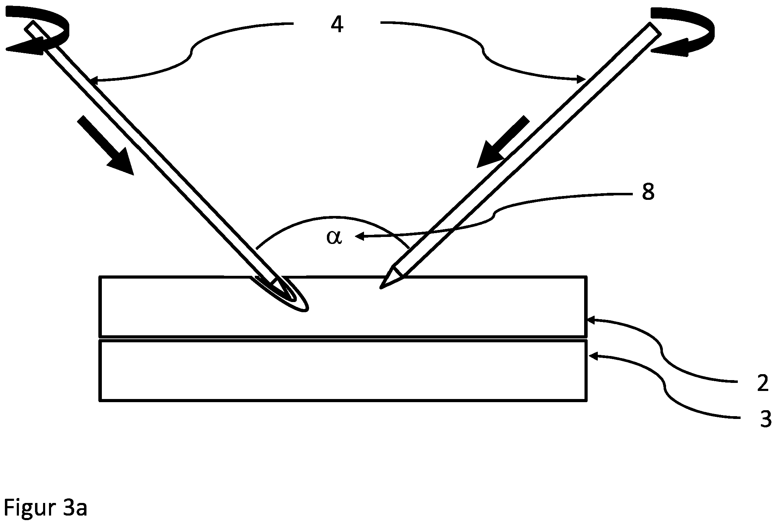

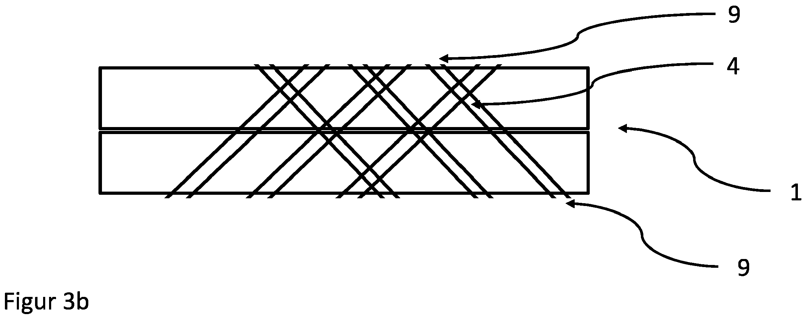

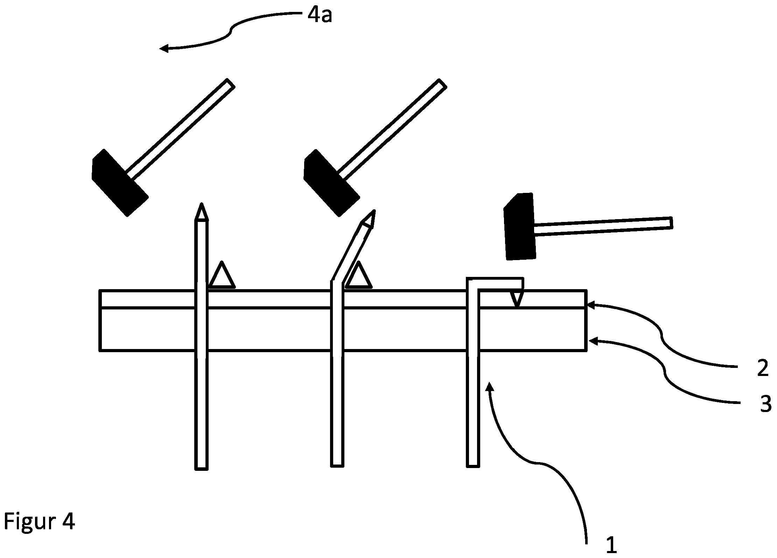

Figuren 3a und 3b zeigen verbundenen Bauteile (2,3), bei denen die Nadeln (4) nicht parallel zueinander ausgerichtet sind. Vielmehr bilden die Nadeln (4) einen Winkel (8) zueinander. In Fig. 3a und 3b beträgt dieser Winkel (8) 90°, es sind aber auch andere Winkel (8) der Nadeln (4) zueinander realisierbar. Eine Vielzahl solcher im rechten Winkel zueinander angeordneten Nadeln (4) kann die mechanischen Eigenschaften des verbundenen Bauteils (1) weiter verbessern.

Die Nadeln (4) können parallel zur Oberfläche der Bauteile (2,3) abgeschnitten und die Oberfläche durch Schleifen und Polieren egalisiert werden.

Figur vier zeigt auf der Oberfläche der Bauteile (2,3) herausragende Abschnitte (9) der Nadeln (4), die durch umbiegen die Festigkeit des verbundenen Bauteils (1) weiter erhöhen können. Dazu kann der herausragende Abschnitt (9) der Nadel (4) mit Hilfe eines Biegewerkzeugs (19) umgebogen werden. Vorteilhaft kann es sein, wenn der herausragende Teil (9) der Nadeln (4) mehrere Biegestellen (11) aufweist. Ein Schenkel (12) des herausragenden Abschnitts (9) kann unter Druck in die Oberfläche des Bauteils (2) hineingetrieben werden.

Es wird angemerkt, dass beschriebenen Ausführungsformen lediglich illustrative und nicht beschränkend sind.

Während die Erfindung illustriert und beschrieben wurde im Detail in den Beispielen und der vorangegangenen Beschreibung, ist es beabsichtigt, dass derartige Illustrationen und Beschreibungen lediglich illustrativ oder exemplarisch und nicht restriktiv sind, so dass die Erfindung nicht durch die offenbarten Ausführungsformen beschränkt ist. In den Ansprüchen schließt das Wort "aufweisend" nicht andere Elemente aus und der unbestimmte Artikel "ein" schließt eine Mehrzahl nicht aus.

Alleinig der Umstand, dass bestimmte Merkmale in verschiedenen abhängigen Ansprüchen genannt sind, beschränkt nicht den Gegenstand der Erfindung. Auch Kombinationen dieser Merkmale können vorteilhaft eingesetzt werden.

## Patentansprüche

1. Verbundene Bauteile (2, 3) aus thermoplastischen Faserverbundwerkstoffen, wobei die Verbindung der Bauteile durch Nadeln (4) erfolgt, die unter Druck (6) und Rotation (5) in das dadurch erweichte Matrixmaterial (7) der Bauteile eingeführt werden,
**dadurch gekennzeichnet,**
**dass** die Nadeln nicht senkrecht zur Bauteiloberfläche an der Ein- oder Austrittstelle angeordnet sind.

2. Verfahren zum Verbinden von Bauteilen (2, 3) aus thermoplastischen Faserverbundwerkstoffen umfassend
das Positionieren der Bauteile zueinander,
das Aufsetzen einer Nadel (4) unter Druck (6),
Versetzen der Nadel (4) in eine Rotationsbewegung (5), so dass das thermoplastische Matrixmaterial erweicht und die Nadel (4) durch das erweichte Matrixmaterial (7) der Bauteile geschoben wird,
Erstarren des thermoplastischen Matrixmaterials,
**dadurch gekennzeichnet,**
**dass** die Nadeln (4) nicht senkrecht zur Bauteiloberfläche an der Ein- oder Austrittstelle angeordnet sind.

3. Bauteile oder Verfahren nach einem der vorhergehenden Ansprüche
**dadurch gekennzeichnet, dass** die Oberfläche der Nadel (4) geriffelt (4b) ist.

4. Bauteile oder Verfahren nach einem der vorhergehenden Ansprüche
**dadurch gekennzeichnet, dass** eine Mehrzahl von Nadeln (4) paarweise über Kreuz zueinander angeordnet sind und dabei der Winkel benachbarter Nadeln (4) zueinander im Wesentlichen 90° beträgt.

5. Bauteile oder Verfahren nach einem der vorhergehenden Ansprüche **dadurch gekennzeichnet, dass** der überstehende Teil der Nadeln (4) so behandelt wird, dass eine ebene Bauteilfläche resultiert.

6. Bauteile oder Verfahren nach einem der vorhergehenden Ansprüche
**dadurch gekennzeichnet, dass** die Bauteile (2, 3) zusätzlich durch ein themoplastisches Schweißverfahren miteinander verbunden werden.

7. Bauteile oder Verfahren nach einem der vorhergehenden Ansprüche
**dadurch gekennzeichnet, dass** eine Bauteiloberfläche ein Blitzschutzmaterial aufweist.

8. Bauteile oder Verfahren nach einem der vorhergehenden Ansprüche
**dadurch gekennzeichnet, dass** die Kraft (6), mit der die Nadeln (4) auf die Bauteil Oberfläche gedrückt werden, zwischen 50 und 1000 N, bevorzugt zwischen 100 und 500 N liegt.

9. Bauteile oder Verfahren nach einem der vorhergehenden Ansprüche
**dadurch gekennzeichnet, dass** die Rotationsfrequenz der rotierenden Nadel (4, 5) 5000-2000 Umdrehungen pro Minute beträgt.

10. Bauteile oder Verfahren nach einem der vorhergehenden Ansprüche **dadurch gekennzeichnet, dass** die überstehenden Teile der Nadeln (4) anschließend so umgebogen werden, so dass die aus dem Bauteil (2) herausragenden Teile der Nadeln mit einem ersten Teil flach auf der oder den Bauteiloberfläche(n) zu liegen kommt oder kommen und mit einem zweiten zum Teil im Wesentlichen senkrecht in die Bauteiloberfläche eindringen.

11. Bauteile oder Verfahren nach einem der vorhergehenden Ansprüche **dadurch gekennzeichnet, dass** die Nadeln (4) eines der zu verbindenden Bauteile (2, 3) nur zum Teil durchdringen, bevorzugt zu höchstens 2/3 bezogen auf die jeweilige Bauteildicke.

12. Bauteile oder Verfahren nach einem der vorhergehenden Ansprüche **dadurch gekennzeichnet, dass** die Nadeln (4) so ausgeführt sind, dass sie eine vordefinierte Bruchstelle aufweisen, die im Wesentlichen bündig zur Bauteiloberfläche positioniert wird.

13. Bauteile oder Verfahren nach einem der vorhergehenden Ansprüche **dadurch gekennzeichnet, dass** die Nadeln (4) einen Kopf aufweisen, der bündig zur Bauteiloberfläche positioniert wird.

14. Bauteile oder Verfahren nach einem der vorhergehenden Ansprüche **dadurch gekennzeichnet, dass** die Verbindungsstelle vor und oder während des Einführens der Nadeln (4) zusätzlich (Heißluft, Induktion, Laserlicht, Infrarot, usw.) aufgewärmt wird.

15. Fahrzeug, insbesondere Flugzeug, mit Bauteilen nach einem der vorhergehenden Ansprüche.

## Claims

1. Bonded components (2, 3) made of thermoplastic fibre composites, the bonding of the components being effected by needles (4) which are introduced under pressure (6) and rotation (5) into the matrix material (7) of the components softened thereby
**characterised in that**
the needles are not arranged perpendicular to the component surface at the entry or exit point.

2. Method for joining components (2, 3) made of thermoplastic fibre composites comprising positioning the components relative to one another
placing a needle (4) under pressure (6),
setting the needle (4) in a rotational movement (5) so that the thermoplastic matrix material softens and the needle (4) is pushed through the softened matrix material (7) of the components,
solidification of the thermoplastic matrix material,
**characterized in that**
the needles (4) are not arranged perpendicular to the component surface at the entry or exit point.

3. Component or process according to one of the preceding claims, **characterised in that** the surface of the needle (4) is corrugated (4b).

4. Component or method according to one of the preceding claims, **characterised in that** a plurality of needles (4) are arranged in pairs crosswise to one another and the angle of adjacent needles (4) to one another is substantially 90°.

5. Components or methods according to one of the preceding claims, **characterised in that** the projecting part of the needles (4) is treated in such a way that a flat component surface results.

6. Component or method according to one of the preceding claims, **characterised in that** the components (2, 3) are additionally joined to one another by a themoplastic welding process.

7. Component or method according to one of the preceding claims, **characterized in that** a component surface has a lightning protection material.

8. Component or method according to one of the preceding claims, **characterized in that** the force (6) with which the needles (4) are pressed onto the component surface is between 50 and 1000 N, preferably between 100 and 500 N.

9. Component or method according to one of the preceding claims, **characterised in that** the rotation frequency of the rotating needle (4, 5) is 5000-2000 revolutions per minute.

10. Component or method according to one of the preceding claims, **characterized in that** the projecting parts of the needles (4) are subsequently bent over in such a way that the parts of the needles projecting from the component (2) come to lie flat on the component surface(s) with a first part and penetrate the component surface substantially perpendicularly with a second part.

11. Component or method according to one of the preceding claims, **characterised in that** the needles (4) penetrate one of the components (2, 3) to be joined only partially, preferably by at most 2/3 relative to the respective component thickness.

12. Component or method according to one of the preceding claims, **characterised in that** the needles (4) are designed in such a way that they have a predefined breaking point which is positioned essentially flush with the component surface.

13. Component or method according to one of the preceding claims, **characterised in that** the needles (4) have a head which is positioned flush with the component surface.

14. Component or method according to one of the preceding claims, **characterised in that** the connection point is additionally heated (hot air, induction, laser light, infrared, etc.) before and/or during the insertion of the needles (4).

15. Vehicle, in particular aircraft, with components according to one of the preceding claims.

## Revendications

1. Composants assemblés (2, 3) en matériaux composites thermoplastiques renforcés par des fibres, l'assemblage des composants étant réalisé par des aiguilles (4) qui sont introduites sous pression (6) et rotation (5) dans le matériau de matrice (7) ainsi ramolli des composants,
**caractérisé en ce que**
**que** les aiguilles ne sont pas disposées perpendiculairement à la surface des composants au point d'entrée ou de sortie.

2. procédé d'assemblage de composants (2, 3) en matériaux composites thermoplastiques renforcés par des fibres, comprenant
le positionnement des composants les uns par rapport aux autres,
la mise en place d'une aiguille (4) sous pression (6),
mise en mouvement rotatif (5) de l'aiguille (4), de sorte que le matériau de matrice thermoplastique se ramollisse et que l'aiguille (4) soit poussée à travers le matériau de matrice ramolli (7) des composants,
solidification du matériau de matrice thermoplastique,
**caractérisé en ce que**
**en ce que** les aiguilles (4) ne sont pas disposées perpendiculairement à la surface du composant au point d'entrée ou de sortie.

3. Composants ou procédés selon l'une des revendications précédentes, **caractérisés en ce que** la surface de l'aiguille (4) est striée (4b).

4. Composants ou procédés selon l'une des revendications précédentes, **caractérisés en ce qu'**une pluralité d'aiguilles (4) sont disposées par paires en croix les unes par rapport aux autres et **en ce que** l'angle des aiguilles (4) voisines les unes par rapport aux autres est sensiblement de 90°.

5. Composants ou procédés selon l'une des revendications précédentes, **caractérisés en ce que** la partie saillante des aiguilles (4) est traitée de manière à obtenir une surface de pièce plane.

6. Composants ou procédés selon l'une des revendications précédentes, **caractérisés en ce que** les composants de construction (2, 3) sont en outre reliés entre eux par un procédé de soudage thermoplastique.

7. Composants ou procédés selon l'une des revendications précédentes, **caractérisés en ce qu'**une surface des composants présente un matériau de protection contre la foudre.

8. Composants ou procédés selon l'une des revendications précédentes, **caractérisés en ce que** la force (6) avec laquelle les aiguilles (4) sont pressées sur la surface de la pièce est comprise entre 50 et 1000 N, de préférence entre 100 et 500 N.

9. Composants ou procédés selon l'une des revendications précédentes, **caractérisés en ce que** la fréquence de rotation des aiguilles rotatives (4, 5) est de 5000-2000 tours par minute.

10. Composants ou procédés selon l'une des revendications précédentes, **caractérisés en ce que** les parties saillantes des aiguilles (4) sont ensuite repliées de telle sorte que les parties des aiguilles qui dépassent du composant (2) viennent se poser à plat sur la ou les surfaces du composant par une première partie et pénètrent sensiblement verticalement dans la surface du composant par une deuxième partie.

11. Composants ou procédés selon l'une des revendications précédentes, **caractérisés en ce que** les aiguilles (4) ne traversent que partiellement l'une des composants (2, 3) à assembler, de préférence au maximum aux 2/3 par rapport à l'épaisseur de la composants concernée.

12. Composants ou procédés selon l'une des revendications précédentes, **caractérisés en ce que** les aiguilles (4) sont conçues de manière à présenter un point de rupture prédéfini qui est positionné sensiblement à fleur de la surface de la composant.

13. Composants ou procédés selon l'une des revendications précédentes, **caractérisés en ce que** les aiguilles (4) présentent une tête qui est positionnée à fleur de la surface du composant.

14. Composants ou procédés selon l'une des revendications précédentes, **caractérisés en ce que** le point de jonction est chauffé en plus (air chaud, induction, lumière laser, infrarouge, etc.) avant et/ou pendant l'introduction des aiguilles (4).

15. Véhicule, notamment avion, comportant des composants selon l'une des revendications précédentes .
